# EUROPÄISCHE PATENTSCHRIFT

(11) **EP 2 626 628 B1**
(45) Veröffentlichungstag und Bekanntmachung des Hinweises auf die Patenterteilung: **09.04.2014**
(21) Anmeldenummer: 13000579.6
(22) Anmeldetag: 05.02.2013
(51) Int. Cl.: F23D 17/00, F23L 7/00, F23L 15/00, F23N 5/08, F27D 99/00, F23D 99/00, F23G 5/20

(54) **Befeuerung eines Industrieofens und zugehöriger Brenner**
Firing of an industrial furnace and associated burner
Conduite d'un four industriel et brûleur associé

(30) Priorität: 09.02.2012 DE 102012002548; 24.04.2012 EP 12002886
(43) Veröffentlichungstag der Anmeldung: 14.08.2013
(73) Patentinhaber: Linde Aktiengesellschaft, 80331 München (DE)
(72) Erfinder: Köder, Horst, 06258 Schkopau (DE)
(74) Vertreter: Gellner, Bernd

(56) Entgegenhaltungen:
- EP-A1- 1 065 461
- WO-A1-00/12767
- WO-A1-89/02051
- WO-A1-95/34791
- DE-A1- 1 501 840
- DE-A1- 19 646 802
- DE-A1-102008 029 512
- FR-A- 1 286 095

## Beschreibung

Die Erfindung betrifft einen Brenner mit im Wesentlichen zylindrischer Geometrie geeignet zur Befeuerung eines Industrieofens umfassend:
- mindestens ein geeignetes Mittel zur Zufuhr eines primären Brennstoffes,
- mindestens ein geeignetes Mittel zur Zufuhr eines sekundären Brennstoffes und
- einen axialen nahezu zylinderförmigen zentralen Teil,
- welcher mindestens eine Düse geeignet zur Zufuhr eines gasförmigen Oxidationsmittels aufweist,
- wobei der zentrale Teil mindestens eine weitere Düse geeignet zur Zufuhr eines gasförmigen Oxidationsmittels aufweist, welche als Lavaldüse ausgeformt ist, wobei die Lavaldüse derart ausgeformt ist, dass das gasförmige Oxidationsmittel auf Überschallgeschwindigkeit, insbesondere mehrfache Überschallgeschwindigkeit, beschleunigt wird, und
- wobei die Lavaldüse derart angeordnet ist, dass das Oxidationsmittel parallel zum sekundären Brennstoff beschleunigt wird.

Die Erfindung betrifft ebenfalls ein Verfahren zum Betrieb eines derartigen Brenners.

Im Folgenden wird die Erfindung anhand eines Brenners in einem Drehrohrofen beschrieben, wie er in einer Anlage zur Herstellung von Zement zur Anwendung kommt. Die vorliegende Erfindung ist jedoch nicht auf Brenner in derartigen Drehrohröfen eingeschränkt, sondern prinzipiell für Brenner in Industrieöfen beliebiger Anwendung geeignet, bei denen ein primärer und ein sekundärer Brennstoff verwendet werden.

Bei der Herstellung von Zement werden die Rohstoffe in der Regel Kalkstein und Ton in Steinbrüchen abgebaut, vorzerkleinert und in ein Zementwerk gebracht. Als Zuschläge dienen Eisenerz und verschiedene Sande. In einer sogenannten Rohmühle werden alle Materialien zusammen vermahlen und gleichzeitig getrocknet. Das dadurch entstehende Rohmehl wird in einem Drehrohrofen bei Temperaturen von ca. 1450 °C zu sogenannten Klinker gebrannt, welcher dann in einem Kühler auf eine Temperatur von unter 200 °C heruntergekühlt wird. Die entstehenden grau-braunen Granalien werden anschließend in einer Kugelmühle zusammen mit Gips oder Anhydrid zum fertigen Produkt, dem Zement vermahlen.

Beim Brennen des entstandenen Rohmehls zu Klinker werden sogenannte Drehrohröfen eingesetzt. Derartige Drehrohröfen sind dem Stand der Technik bekannt und verwenden zur Befeuerung zumeist einen primären und einen sekundären Brennstoff.

Ein Drehrohrofen wird in EP0451648 beschrieben. Gemäß dem dort beschriebenen Stand der Technik weist der Drehrohrofen eine im Wesentlichen zylindrische Geometrie auf. Über zwei Lanzen werden von den beiden entgegengesetzten Grundflächen des zylindrischen Drehrohrofens ein Brennstoff und ein Oxidant in den Ofen injiziert. Der zylindrische Körper des Drehrohrofens rotiert um die Zylinderachse, wobei das sogenannte Rauchgasende feststehend und das andere Ende drehbar ist. Der Oxidant wird vom Rauchgasende mit einem Impuls in den Drehrohrofen injiziert, der ausreichend ist, um das Gas über eine Strecke zu treiben, die wenigstens den Doppelten des Durchmessers und der halben Länge des zylindrischen Körpers des Drehrohrofens entspricht. Zur Sicherstellung des hohen Impulses werden Düsen mit Blenden verwendet.

Der in EP0451648 offenbarte Drehrohrofen dient der Verbrennung eines Abfalls, welcher brennbare Anteile enthält. Der Abfall wird in den Drehrohrofen geführt, und verbrennt als sekundärer Brennstoff zusammen mit dem primären Brennstoff, welcher mit dem Oxidant über die Lanzen über den Drehrohrofen injiziert wird. Als Oxidant wird Luft, sauerstoffangereicherte Luft mit einem Sauerstoffanteil zwischen 20 und 30% oder technischer Sauerstoff mit einer Reinheit von bis zu 99,5% verwendet.

Ein ähnlicher Drehrohrofen und ein Verfahren zum Betrieb eines derartigen Drehrohrofens werden in EP0344784 beschrieben. Gemäß dem dort beschriebenen Verfahren werden Brennstoffe und Oxidationsmittel in einem oxidationsreichen Strahl mit einer Geschwindigkeit eingeblasen, die ausreicht, um einen verminderten Druck und folglich eine starke Rückstromzone innerhalb der Verbrennungszone nahe dem oxidationsmittelreichen Strahl auszubilden. Als Oxidationsmittel wird sauerstoffangereicherte Luft mit mindestens 30 Vol-% Sauerstoff verwendet. Bevorzugt wird reiner Sauerstoff verwendet. Auch gemäß dem Stand der Technik nach EP0344784 handelt es sich um einen Drehrohrofen, der zur Verbrennung von brennbaren Abfällen verwendet wird.

Dokument US20080090194 offenbart einen Drehrohrofen, wie er in einer Anlage zur Herstellung von Zement zur Kalzinierung von Lehm verwendet wird. Gemäß dem hier offenbarten Stand der Technik werden ein Kraftstoff und ein Oxidant zentral über einen Brenner entlang der Rotationsachse des zylinderförmigen Körpers des Drehrohrofens injiziert. Der Sauerstoffgehalt des als primären Oxidanten bezeichneten Gasstroms wird dabei so gewählt, dass sich ein unterstöchemetrisches Verhältnis von Sauerstoff zu Kraftstoff in der Verbrennungszone von ca. 0,3 bis 0,9 ausbildet. Zusätzlich wird ein als zweiter Oxidant bezeichneter Gasstrom in den Drehrohrofen injiziert, wobei die Injektion hier außerhalb der Verbrennungszone auch entlang der zylindrischen Achse des Drehrohrofens erfolgt. Der Sauerstoff des zweiten Oxidanten soll dabei in die Verbrennungszone diffundieren. Die Sauerstoffgehalte beider Oxidanten werden derart eingestellt, dass der Sauerstoffgehalt zwischen 27,5 Vol-% und 72,5 Vol-% des gesamten in den Drehrohrofen geführten Gases beträgt. Durch die radiale Injektion des zweiten Oxidanten entlang der Rotationsachse des Drehrohofens soll eine räumlich geleitete Verbrennung gewährleistet werden.

Eine Brennervorrichtung zum Betreiben eines Schachtoffens entsprechend des Oberbegriffs des Anspruchs 1 ist in der Druckschrift DE 196 46 802 A1 offenbart.

Der vorliegenden Erfindung liegt die Aufgabe zugrunde, einen alternativen Brenner zur Befeuerung eines Industrieofens sowie ein Verfahren zum Betrieb eines derartigen Brenners zur Verfügung zu stellen. Der erfindungsgemäße Brenner soll auch zur Befeuerung eines Drehrohrofens geeignet sein, wie er in einer Anlage zur Herstellung von Zement Verwendung findet.

Diese Aufgabe wird durch einen Brenner gemäß der Merkmale des Anspruches 1 gelöst. Weitere vorteilhafte Ausgestaltungen des erfindungsgemäßen Brenners werden in den Unteransprüchen gegeben.

Der erfindungsgemäße Brenner weist im Wesentlichen eine zylindrische Geometrie auf und umfaßt mindestens ein geeignetes Mittel zur Zufuhr eines primären Brennstoffes und mindestens ein geeignetes Mittel zur Zufuhr eines sekundären Brennstoffes. Der primäre Brennstoff dient dabei zur Erreichung der notwendigen hohen Verbrennungstemperaturen. Dieser ist meist höherwertig als der sekundäre Brennstoff. Der sekundäre Brennstoff wird demzufolge verwendet, um einen Teil der Heizleistung zu liefern und dabei den höherwertigen teuren primären Brennstoff teilweise einzusparen. Der Brenner umfaßt einen axialen nahezu zylinderförmigen zentralen Teil, welcher mindestens eine Düse zur Zufuhr eines gasförmigen Oxidationsmittels aufweist.

Gemäß dem Erfindungsgedanken weist der zentrale Teil mindestens eine weitere Düse zur Zufuhr eines gasförmigen Oxidationsmittels auf, welche als Lavaldüse ausgeformt ist. Durch diese zusätzliche als Lavaldüse ausgeformte Düse zur Zufuhr eines gasförmigen Oxidationsmittels wird eine hinreichende Beschleunigung des gasförmigen Oxidationsmittels auf Überschallgeschwindigkeit, insbesondere mehrfache Überschallgeschwindigkeit, sichergestellt. Unter mehrfacher Überschallgeschwindigkeit werden im Rahmen dieser Erfindung nicht nur ganzzahlige Vielfache der Überschallgeschwindigkeit wie 2, 3, 4... verstanden, sondern auch Bruchteile größer 1 wie 1.2, 1.5, 3.5 ...

Durch die Ausformung der Düse als Lavaldüse wird das darüber zugeführte Oxidationsmittel auf Überschallgeschwindigkeit beschleunigt, wodurch es einen hinreichend hohen Impuls erhält, um eine gute Durchmischung der sekundären Brennstoffe mit Oxidationsmittel über die gesamte Länge des ebenfalls zylinderförmigen Drehrohrofens zu gewährleisten. Die Lavaldüse ist dabei derart orientiert, dass die Beschleunigung des Oxidationsmittels parallel zur Richtung des sekundären Brennstoffes erfolgt. Bei bestimmungsgemäßer Orientierung des Brenners werden erfindungsgemäße somit sowohl Oxidationsmittel aus der Lavaldüse als auch primärer und sekundärer Brennstoff parallel zueinander und zur Längsachse des Drehrohrofen in den Drehrohrofen eingebracht. Die Verbrennung findet dabei durch den langen Lavalstrahl und der Überschallgeschwindigkeit, induziert durch die Lavaldüse, wesentlich entfernt vom Brennerkopf im Drehrohrofen statt. Bei einer Unterschallinjektion wie im Stand der Technik würde die Verbrennung deutlich näher am Brennerkopf stattfinden. Dies führt im Stand der Technik zu einer zu hohen Flammentemperatur am Brennerkopf und einer verringerten Wirksamkeit des Oxidationsmittel im Drehrohrofen.

Die Lavaldüse weist Mittel zum Aufheizen des Oxidationsmittels auf, insbesondere Mittel zum Aufheizen des Oxidationsmittels auf eine Temperatur zwischen -30°C und 1600°C, bevorzugt 800°C. Durch die Vorwärmung wird eine sehr hohe Austrittgeschwindigkeit des Sauerstoffs verbunden mit einer hohen Abgasansaugung erreicht. Zielführend ist eine verbesserte Mischung von Sekundärbrennstoff mit Sauerstoff und der vorgewärmten Verbrennungsluft.

Erfindungsgemäß ist das Mittel zum Aufheizen des Oxidationsmittels als Düse geeignet zur Zufuhr eines gasförmigen oder flüssigen Brennstoffes, bevorzugt Erdgas, ausgebildet und besonders bevorzugt weist es eine elektrische Zündeinrichtung auf. Durch die Verbrennung von gasförmigen oder flüssigen Brennstoffen lässt sich einfach die gewünschte Vorwärmtemperatur des Oxidationsmittels einstellen. Zusätzlich lässt sich mittels der Zufuhr über eine Düse der Impuls der Brennstoffe genau steuern und somit die Austrittsgeschwindigkeit des Oxidationsmittels aus der Lavaldüse stufenlos steuern.

Zweckmäßigerweise weist die Lavaldüse eine Infrarot- oder Ultraviolettsonde geeignet zur Überwachung der Flammtemperatur in der Lavaldüse auf. Durch diese Ausgestaltung der Erfindung wird eine laufende Überwachung und Kontrolle der Vorwärmtemperatur des Oxidationsmittels und dadurch des gesamten Betriebs des Brennners ermöglicht und die Verbrennung im Ofen kann gemäß den jeweiligen Betriebsanforderungen optimal gesteuert werden.

In einer Ausgestaltung der Erfindung bei der besonders hohe Vorwärmtemperaturen des Oxidationsmittels verwendet werden, ist die Lavaldüse zusätzliche mit einer äußeren Kühlung, bevorzugt einer Wasserkühlung oder einer Wasser-Luft-Sprühkühlung, ausgestattet. In dieser Ausgestaltung der Erfindung wird eine lokale Überhitzung der Lavaldüse durch die hohen Vorwärmtemperaturen vermieden.

Bevorzugt ist die Lavaldüse innerhalb einer größeren Düse angeordnet. Die größere Düse ist ebenfalls zur Zufuhr eines gasförmigen Oxidationsmittels ausgestaltet. Durch die Anordnung der Lavaldüse in einer größeren Düse, durch die ebenfalls Oxidationsmittel zugeführt wird, bildet sich ein Hüllstrom um die Lavaldüse, der zum Kühlen und Freihalten im Standby Betrieb der Lavaldüse geeignet ist. Dies gilt besonders für Betriebszustände des Brenners, wo der Industreiofen nicht im Normalbetrieb betrieben wird, wie beispielsweise dem Anfahren des Ofens.

Gemäß einer bevorzugten Ausgestaltung der Erfindung ist mindestens ein Mittel zur Zufuhr des primären Brennstoffes als erster Ringspalt ausgeführt. Durch die Zufuhr des primären Brennstoffes über einen Ringspalt wird sichergestellt, dass der primäre Brennstoff über den Querschnitt des beispielsweise zylindrischen Industrieofens gleichmäßig verteilt ist.

Bevorzugt wird mindestens ein Mittel zur Zufuhr des sekundären Brennstoffes als Düse ausgeführt und im zylinderförmigen zentralen Teil angeordnet. Als sekundäre Brennstoffe kommen im Wesentlichen Kunststoffschnipsel und/oder Heizöl und/oder Klärschlämme in Frage. Dies sind somit entweder feste oder flüssige Sekundärbrennstoffe. Entsprechend werden für die jeweiligen sekundären Brennstoffe bevorzugt geeignete Düsen zur Zufuhr gewählt.

Zweckmäßigerweise weist der Brenner mindestens ein Mittel zur Zufuhr eines gasförmigen Oxidationsmittels auf, welches als Ringspalt ausgebildet ist. Durch die Zufuhr des gasförmigen Oxidationsmittels über einen Ringspalt am Brenner wird sichergestellt, dass das gasförmige Oxidationsmittel über den Querschnitt eines nahezu zylinderförmigen Industrieofens gleichmäßig verteilt wird.

Gemäß einer bevorzugten Ausgestaltung der Erfindung weist der Brenner einen ersten Ringspalt zur Zufuhr des primären Brennstoffes, eine zweiten Ringspalt und einen dritten Ringspalt zur Zufuhr eines gasförmigen Oxidationsmittels auf, wobei der zweite Ringspalt eine für Axialbewegung geeignete Mittel und der dritte Ringspalt eine für Drallbewegung geeignete Mittel aufweisen, um eine Stabilisierung und Führung des primären Brennstoffes (z.B Kohlestaub) zu bewirken. Besonders bevorzugt weißt der zweite und dritte Ringspalt einen größeren Durchmesser als der erste Ringspalt auf. In dieser Ausgestaltung der Erfindung werden sowohl primärer Brennstoff als auch das zugehörige Oxidationsmittel gleichmäßig über den Querschnitt des beispielsweise zylinderförmigen Industrieofens verteilt. Bei einer Verwendung des Drehrohrofens in einer Anlage zur Herstellung von Zement befindet sich der schmelzflüssige Klinker in der Regel auf der inneren Wand des Industrieofens, beispielsweise des Drehrohrofens. Durch die Zufuhr über die Ringspalte bilden sich axiale Strömungen von primärem Brennstoff und zugehörigen Oxidationsmittel aus, die so für einen optimalen Wärmeübertrag auf den schmelzflüssigen Klinker sorgen. Durch die zusätzlichen Mittel zur Induzierung einer Drallbewegung des Oxidationsmittels wird die Durchmischung von Oxidationsmittel und primären Brennstoff weiter verbessert.

Vorteilhafterweise wird die Lavaldüse derart auf dem Brenner angeordnet, dass sie bei bestimmungsgemäßen Gebrauch des Brenners näher zum Klinker im Industrieofen oder Drehofen ist, als das/die Mittel zur Zuführung des sekundären Brennstoffes. Insbesondere ist die Lavaldüse unterhalb der horizontalen Achse und in Drehrichtung neben der vertikalen Achse angeordnet, wobei die horizontale und die vertikale Achse sich im Zentrum des Brenners kreuzen und die Drehrichtung in Blick frontal auf die Brennerflamme bei bestimmungsgemäßer Gebrauch des Brenners bestimmt wird. In dieser Ausgestaltung der Erfindung wird sichergestellt, dass die höchsten Temperaturen im Ofen im Bereich des Klinkers herrschen, wodurch auch die Ofenausmauerung vor thermischer Überhitzung und zusätzlichen Verschleiß geschützt wird.

Ferner umfaßt die Erfindung ein Verfahren zum Betrieb des erfindungsgemäßen Brenners in einem Industrieofen entsprechend des Anspruchs 11, wobei vorwiegend der sekundärer Brennstoff mit mindestens einem gasförmigen Oxidationsmittel verbrannt wird, und wobei mindestens ein gasförmiges Oxidationsmittel sauerstoffangereicherte Luft, technischer Sauerstoff oder reiner Sauerstoff ist. Erfindungsgemäß wird die sauerstoffangereicherte Luft, der technische Sauerstoff oder der reine Sauerstoff über eine Lavaldüse auf Überschall beschleunigt. Durch die erfindungsgemäße Beschleunigung der sauerstoffangereicherten Luft, des technischen Sauerstoffs oder des reinen Sauerstoffs wird sichergestellt, dass der Impuls ausreichend hoch ist, um eine gleichmäßige Verteilung des Sauerstoffs über die gesamte Länge des Ofens zu gewährleisten. Zusätzlich wird die sauerstoffangereicherte Luft, der technische Sauerstoff oder der reine Sauerstoff in eine Richtung parallel zur Richtung des sekundären Brennstoffs und parallel zur Achse des Ofens, bevorzugt eines Drehrohrofens, bei bestimmungsgemäßen Gebrauch des Brenners beschleunigt.

Bevorzugt wird die Sauerstoff angereicherte Luft, der technische Sauerstoff oder der reine Sauerstoff auf eine Temperatur zwischen -30°C und 1600°C, bevorzugt auf 800°C vorgewärmt.

Erfindungsgemäß erfolgt die Vorwärmung mittels Zufuhr eines gasförmigen oder flüssigen Brennstoffs, bevorzugt Erdgas, über eine Düse. Dabei wird zweckmäßigerweise der gasförmige oder flüssige Brennstoff mittels elektrischer Zündeinrichtung entflammt wird und bevorzugt die Verbrennung mittels Infrarot- oder Ultraviolettsonde überwacht.

In Ausgestaltungen der Erfindungen, bei denen die Sauerstoff angereicherte Luft, der technische Sauerstoff oder der reine Sauerstoff auf hohe Temperaturen (über 800 °C) erwärmt wird, ist es zweckmäßig die Lavaldüse mit einer Wasserkühlung oder einer Wasser-Luft-Sprühkühlung zu kühlen, um ein Überhitzen der Düse zu vermeiden.

Bevorzugt wird der primäre Brennstoff über einen Ringspalt und mindestens ein gasförmiges Oxidationsmittel, bevorzugt Luft, über mindestens einen weiteren Ringspalt zugeführt, wobei dabei mindestens ein Ringspalt eine Drallbewegung des gasförmigen Oxidationsmittels induziert. Bevorzugt wird ein gasförmiges Oxidationsmittels, bevorzugt Luft, über den äußersten Ringspalt zugeführt. Die Zufuhr über die Ringspalte und die zugehörige Drallbewegung des primären gasförmigen Oxidationsmittels sorgen für eine gleichmäßige Verteilung und Durchmischung von Brennstoff und Oxidationsmittel über den Querschnitt des Ofens, insbesondere den Querschnitt eines zylinderförmigen Drehrohrofens.

Dabei wird besonders bevorzugt ein über den Klinkerkühler vorgewärmtes sekundäres gasförmige Oxidationsmittel, bevorzugt Luft, zwischen Brenner und Ofen zugeführt.

Zweckmäßigerweise werden verschiedene sekundäre Brennstoffe über verschiedene Zuführungen, bevorzugt Düsen, zugeführt. Durch die Zufuhr von sekundären Brennstoffen kann die Menge an verwendetem höherwertigen primären Brennstoff reduziert werden, wobei gleichzeitig die zugeführte Wärmemenge aufrecht erhalten wird.

Zweckmäßigerweise wird technischer oder reiner Sauerstoff über eine Lavaldüse in einen Luftstrom in einer größeren Düse auf Überschall beschleunigt. Der die Lavaldüse umhüllende Luftstrom dient dabei der Kühlung der eigentlichen Lavaldüse und dem Freihalten.

Der erfindungsgemäße Brenner eignet sich besonders zur Befeuerung eines Drehrohofens in einer Anlage zur Herstellung von Zement.

Der erfindungsgemäße Brenner wird dabei bevorzugt im Gegenstrom zur Fließrichtung des Klinkers im Drehrohofen angeordnet. Zusätzlich wird durch den erfindungsgemäßen Brenner der Sauerstoffanteil bei der Verbrennnung durch die über die Lavaldüse zugeführte sauerstoffangereicherte Luft, den reinen Sauerstoff oder den technischen Sauerstoff erhöht, wodurch die Flammentemperatur steigt und der Wärmeübertrag durch Strahlung auf den schmelzflüssigen Klinker verbessert wird. Dadurch werden ebenfalls die zugeführten Sekundärbrennstoffe besser vorgewärmt, verdampft, vergast und schließlich verbrannt. Durch die verbesserte Verbrennung und durch Mischung der Brennstoffe mit dem gasförmigen Oxidationsmittel können zusätzlich die Anteile an Sekundärbrennstoffen gegenüber Primärbrennstoff gesteigert werden. Dadurch läßt sich ein Drehrohrofen mit dem erfindungsgemäßen Brenner deutlich günstiger als ein Drehrohrofen nach dem Stand der Technik betreiben.

Die Zufuhr der sauerstoffangereicherten Luft, des technischen Sauerstoffs oder des reinen Sauerstoffs über die Lavaldüse stabilisiert den Verbrennungsprozeß und erlaubt ein schnelles Anfahren nach Abschalten des Brenners. Durch die Überschallgeschwindigkeitszufuhr mittels Lavaldüse vermischen sich die Brennstoffe und die sauerstoffangereicherte Luft, der technische Sauerstoff bzw. der reine Sauerstoff in größerer Entfernung vom Brenner, wodurch die Gefahr von Rückzündungen und Betriebsstörungen minimiert wird.

Mit der vorliegenden Erfindung gelingt es insbesondere, einen alternativen Brenner und ein Verfahren zum Betrieb dieses Brenners zur Verfügung zu stellen, der zur Befeuerung eines Drehrohrofens in einer Anlage zur Herstellung von Zement geeignet ist. Zusätzlich wird eine optimale Durchmischung der Brennstoffe und Oxidationsmittel gewährleistet.

Weitere bevorzugte Anwendungsgebiete für die Erfindung sind Brenner in einem Drehrohrofen, insbesondere einem Drehrohrofen zur Zementherstellung, einem Drehtrommelofen, insbesondere zum Schmelzen und/oder Erwärmen von Aluminium, Kupfer oder Blei, oder Brenner in einem Lichtbogenofen zur Stahlherstellung.

Im Folgenden soll die Erfindung anhand des in den Figuren dargestellten Ausführungsbeispiels der Erfindung näher erläutert werden.

Es zeigen
Figur 1 ein Ausführungsbeispiel des erfindungsgemäßen Brenners in der Aufsicht und
Figur 2 die Lavaldüse aus Figur 1 im Querschnitt und im Detail
Figur 3 ein alternatives Ausführungsbeispiel des erfindungsgemäßen Brenners im bestimmungsgemäßen Gebrauch

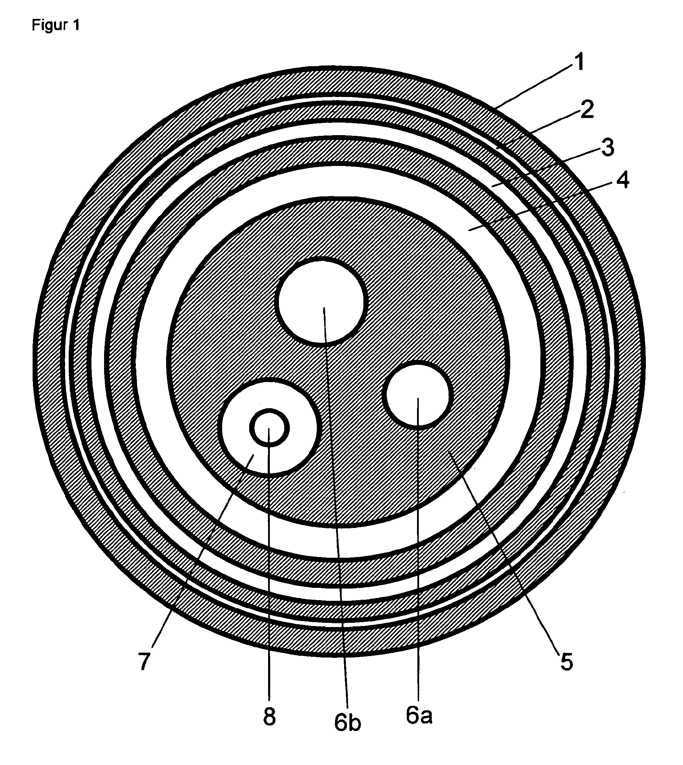

Figur 1 zeigt ein Ausführungsbeispiel eines nahezu zylindrischen Brenners 1, wobei der Brenner 1 vom Brennerkopf her in der Aufsicht dargestellt ist. Der Brenner 1 hat einen kreisförmigen Querschnitt. Er weist mehrere Ringspalte 2, 3 und 4 sowie einen zentralen nahezu zylindrischen Teil 5 auf. Der innerste Ringspalt 4 dient zur Zufuhr des primären Brennstoffes, welcher hauptsächlich aus Kohlenstaub oder Tiermehl besteht. Über die beiden äußeren Ringspälte 2 und 3 wird gasförmiges Oxidationsmittel im Wesentlichen Luft zugeführt. Der Ringspalt 3 weist dabei geeignete Mittel auf, um eine Drallströmung der zugeführten Luft zu erzeugen. In dieser Ausgestaltung des erfindungsgemäßen Brenners werden somit eine axiale Strömung des primären Brennstoffs mit einer umgebenden axialen Strömung von Luft und einer Drallströmung von Luft verwendet. Dadurch bildet sich eine homogene axial gut verteilte Feuerung mit optimalem Wärmeübertrag auf den schmelzflüssigen Klinker an der Innenwand des Drehrohrofens (nicht dargestellt) aus.

Der nahezu zylindrische zentrale Teil 5 weist zwei Düsen 6a und 6b zur Zufuhr eines sekundären Brennstoffes auf. Dabei können entweder Heizöl oder Klärschlämme über die Düse 6a und/oder Kunststoffschnipsel über die Düse 6b als sekundäre Brennstoffe zugeführt werden. Innerhalb einer weiteren Düse 7 im zylindrischen zentralen Teil 5 befindet sich eine Lavaldüse 8 zur Zufuhr eines gasförmigen Oxidationsmittels mit mehrfacher Überschallgeschwindigkeit. Über die Lavaldüse 8 wird dabei hauptsächlich sauerstoffangereicherte Luft, technischer Sauerstoff oder reiner Sauerstoff zugeführt.

In der größeren Düse 7 wird Luft zugeführt, die derart einen Hüllstrom bildet, der dafür sorgt, dass die Lavaldüse gleichzeitig gekühlt und freigehalten wird. Über die Lavaldüse 8 wird sauerstoffangereicherte Luft, technischer Sauerstoff oder reiner Sauerstoff mit Überschallgeschwindigkeit in den Drehrohrofen induziert, wodurch sich eine optimale Durchmischung des primären Brennstoffes und der zugeführten gasförmigen Oxidationsmittel im Drehrohrofen ergibt. Besonders mischt sich durch den hohen Impuls resultierend aus der Überschallgeschwindigkeitkeitszufuhr des reinen Sauerstoffs, des technischen Sauerstoffs oder der sauerstoffangereicherten Luft der sekundäre Brennstoff optimal mit dem Oxidationsmittel. Die Verbrennung findet dabei durch den langen Lavalstrahl und die Überschallgeschwindigkeit wesentlich entfernt vom Brennerkopf im Drehrohrofen statt.

Die über die äußeren Ringspalte 2 und 3 zugeführte Luftmenge wird dabei um den Sauerstoffanteil aus der Lavaldüse reduziert. In der Regel wird in einem Drehrohrofen zur Zementherstellung zusätzlich noch vorgewärmte Sekundärluft im Gegenstrom zur Primärluft des Brenners induziert. Durch die Reduktion der kalten Primärluft der Ringspalte 2 und 3 läßt sich daher Energie beim Betrieb des Drehrohrofens durch die daraus resultierende Reduktion des Stickstoff Ballastes in der vorgewärmten Sekundärluft einsparen.

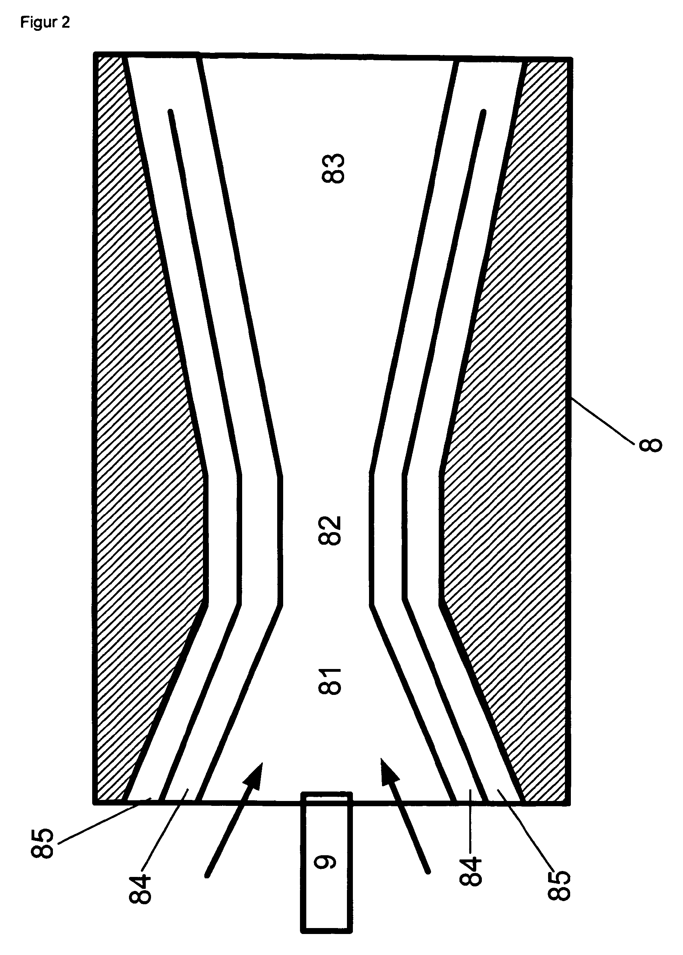

Figur 2 zeigt die Lavaldüse 8 im Querschnitt. Die sauerstoffangereicherte Luft, der technische Sauerstoff oder der reine Sauerstoff wird in Pfeilrichtung in den konvergenten Teil 81 auf den kurzen zylindrischen Teil 82 geführt. In dem zylindrichen Teil 82 wird die Schallgescheindigkeit erreicht und anschließend sorgt der divergente Teil 83 für eine Beschleunigung des zugeführten Oxidationsmittels auf Überschallgeschwindigkeit. Über die Düse 9 wird ein gasförmiger oder flüssiger Brennstoff, in diesem Ausführungsbeispiel Erdgas, in den konvergenten Teil 81 gedüst und mit der sauerstoffangereicherten Luft, dem technischen Sauerstoff oder dem reinen Sauerstoff vermischt. Durch die Verbrennung des Brennstoffes wird die sauerstoffangereicherte Luft, der technische Sauerstoff oder der reine Sauerstoff auf die gewünschte Temperatur vorgewärmt. Die Vorwärmung erfolgt somit in der Lavaldüse vor Verlassen des Brenners und damit vor Kontaktierung mit dem eigentlichen sekundären Brennstoff. Die Verbrennung zur Vorwärmung konsumiert nur einen Bruchteil der zugeführten sauerstoffangereicherten Luft, des technischen Sauerstoffs oder des reinen Sauerstoffs. Über den Impuls des Erdgases kann dabei stufenlos die Geschwindigkeit der sauerstoffangereicherten Luft, des technischen Sauerstoffs oder des reinen Sauerstoffs gesteuert werden. Um eine Überhitzung der Lavaldüse 8 zu vermeinden ist diese mit Kühlkanälen 84 und 85 ausgestattet. In diesem Ausführungsbeispiel der Erfindung wird Kühlwasser über den Kanal 84 zugeführt und als erwärmtes Kühlwasser über den Kanal 85 abgeführt. Die Verbrennung des Erdgases wird über eine elektrische Zündeinrichtung (nicht dargestellt) mittels Zündfunken gestartet.

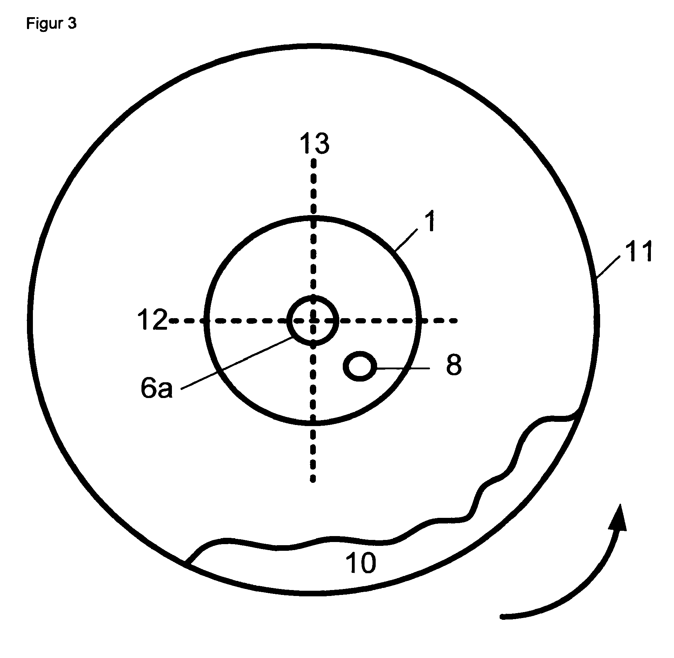

Das Ausführungsbeispiel gemäß Figur 3 entspricht im Wesentlichen dem Ausführungsbeispiel aus Figur 1, jedoch weist diese Ausgestaltung des erfindungsgemäßen Brenners nur eine Düse 6a zur Zuführung des sekundären Brennstoffes auf. Ansonsten entspricht die Ausgestaltung nach Figur 3 der Ausgestaltung nach Figur 1 und wird hier im bestimmungsgemäßen Gebrauch dargestellt. Figur 1 zeigt dabei den Blick in den Drehofen 11 auf die Flamme des Brenners 1.

Der Brenner 1 ist im Mittelpunkt des Drehofens 11 angeordnet. Der zu brennende Klinker 10 befindet sich hauptsächlich am Boden des Drehofens 11 und neben der Vertikalen 13 in Drehrichtung (dargestellt durch den gekrümmten Pfeil). In dieser Ausgestaltung der Erfindung ist die Lavaldüse 8 derart angeordnet, dass sie dem Klinker 10 näher ist als die Düse 6a für den sekundären Brennstoff. Vertikale 13 und Horizontale 12 kreuzen sich im Mittelpunkt des Brenners, wo sich auch die Düse 6a zur Zufuhr des sekundären Brennstoffes befindet. Die Lavaldüse 8 ist hier unterhalb der Horizontalen 12 und in Drehrichtung neben der Vertikalen 13 angeordnet.

## Patentansprüche

1. Brenner (1) mit im Wesentlichen zylindrischer Geometrie geeignet zur Befeuerung eines Industrieofens umfassend:
• mindestens ein geeignetes Mittel zur Zufuhr eines primären Brennstoffes (4),
• mindestens ein geeignetes Mittel zur Zufuhr eines sekundären Brennstoffes (6a, 6b) und
• einen axialen nahezu zylinderförmigen zentralen Teil (5),
• welcher mindestens eine Düse (7) geeignet zur Zufuhr eines gasförmigen Oxidationsmittels aufweist,
• wobei der zentrale Teil (5) mindestens eine weitere Düse (8) geeignet zur Zufuhr eines gasförmigen Oxidationsmittels aufweist, welche als Lavaldüse (8) ausgeformt ist, wobei die Lavaldüse (8) derart ausgeformt ist, dass das gasförmige Oxidationsmittel auf Überschallgeschwindigkeit, insbesondere mehrfache Überschallgeschwindigkeit, beschleunigt werden kann, und
• wobei die Lavaldüse derart angeordnet ist, dass das Oxidationsmittel parallel zum sekundären Brennstoff beschleunigt werden kann,
**dadurch gekennzeichnet, dass**
die Lavaldüse (8) Mittel zum Aufheizen des Oxidationsmittels aufweist, welche als Düse (09) geeignet zur Zufuhr eines gasförmigen oder flüssigen Brennstoffes, bevorzugt Erdgas, ausgebildet ist und bevorzugt eine elektrische Zündeinrichtung aufweist.

2. Brenner nach Anspruch 1, **dadurch gekennzeichnet, dass** die Mittel zum Aufheizen des Oxidationsmittels auf eine Temperatur zwischen -30°C und 1600°C, bevorzugt 800°C, geeignet sind.

3. Brenner nach einem der Ansprüche 1 oder 2, **dadurch gekennzeichnet, dass** die Lavaldüse (8) eine Infrarot- oder Ultravioletsonde geeignet zur Überwachung der Flammtemperatur in der Lavaldüse (8) aufweist.

4. Brenner nach einem der Ansprüche 1 bis 3, **dadurch gekennzeichnet, dass** die Lavaldüse zusätzliche eine äußere Kühlung (84, 85), bevorzugt eine Wasserkühlung oder eine Wasser-Luft-Sprühkühlung, aufweist.

5. Brenner nach einem der vorangegangenen Ansprüche, **dadurch gekennzeichnet, dass** die Lavaldüse (8) innerhalb einer größeren Düse (7) angeordnet ist.

6. Brenner (1) nach einem der vorangegangenen Ansprüche, **dadurch gekennzeichnet, dass** mindestens ein Mittel zur Zufuhr des primären Brennstoffes als erster Ringspalt (4) ausgeführt ist.

7. Brenner (1) nach einem der vorangegangenen Ansprüche, **dadurch gekennzeichnet, dass** mindestens ein Mittel zur Zufuhr des sekundären Brennstoffes als Düse (6a, 6b) ausgeführt und im zylinderförmigen zentralen Teil (05) angeordnet ist.

8. Brenner (1) nach einem der vorangegangenen Ansprüche, **dadurch gekennzeichnet, dass** der Brenner (1) mindestens ein Mittel zur Zufuhr eines gasförmigen Oxidationsmittels aufweist, welches als Ringspalt (2, 3) ausgebildet ist.

9. Brenner (1) nach nach einem der vorangegangenen Ansprüche, **dadurch gekennzeichnet, dass** der Brenner (1) einen ersten Ringspalt (4) zur Zufuhr des primären Brennstoffes, einen zweiten Ringspalt (2) und einen dritten Ringspalt (3) zur Zuführung eines gasförmigen Oxidationsmittels aufweist, wobei der dritte Ringspalt (3) geeignete Mittel aufweist, um eine Drallbewegung des gasförmigen Oxidationsmittels zu indizieren.

10. Brenner (1) nach Anspruch 9, **dadurch gekennzeichnet, dass** der zweite und/oder dritte Ringspalt (2, 3) einen größeren Durchmesser als der erste Ringspalt (4) aufweisen/aufweist.

11. Verfahren zum Betrieb eines Brenners (1) in einem Industrieofen, wobei ein primärer Brennstoff und mindestens ein sekundärer Brennstoff mit mindestens einem gasförmigen Oxidationsmittel verbrannt werden, wobei mindestens ein gasförmiges Oxidationsmittel Sauerstoff angereicherte Luft, technischer Sauerstoff oder reiner Sauerstoff ist, **dadurch gekennzeichnet, dass** die Sauerstoff angereicherte Luft, der technische Sauerstoff oder der reine Sauerstoff vorgewärmt und über eine Lavaldüse auf Überschall parallel zur Ausstoßrichtung des primären und sekundären Brennstoffes beschleunigt werden, wobei die Lavaldüse Mittel zum Aufheizen des Oxidationsmittels aufweist und wobei die Vorwärmung mittels Zufuhr eines gasförmigen oder flüssigen Brennstoffs, bevorzugt Erdgas, über eine Düse erfolgt.

12. Verfahren nach Anspruch 11, **dadurch gekennzeichnet, dass** die Sauerstoff angereicherte Luft, der technische Sauerstoff oder der reine Sauerstoff auf eine Temperatur zwischen -30°C und 1600°C, bevorzugt 800°C vorgewärmt wird.

13. Verfahren nach einem der Ansprüche 11 oder 12, **dadurch gekennzeichnet, dass** technischer oder reiner Sauerstoff über eine Lavaldüse (8) in einen Luftstrom in einer größeren Düse (7) auf Überschall beschleunig wird.

14. Verfahren nach einem der Ansprüche 11 bis 13, **dadurch gekennzeichnet, dass** ein Brenner in einem Drehrohrofen, insbesondere einem Drehrohrofen zur Zementherstellung, einem Drehtrommelofen, insbesondere zum Schmelzen und/oder Erwärmen von Aluminium, Kupfer oder Blei, oder in einem Lichtbogenofen zur Stahlherstellung betrieben wird.

## Claims

1. Burner (1) with essentially cylindrical geometry, suitable for firing an industrial furnace, comprising,
• at least one suitable means for feeding a primary fuel (4),
• at least one suitable means for feeding a secondary fuel (6a, 6b), and
• an axial virtually cylindrical central part (5),
• which has at least one nozzle (7) suitable for feeding a gaseous oxidant,
• the central part (5) having at least one further nozzle (8), which is shaped as a Laval nozzle (8) suitable for feeding a gaseous oxidant, the Laval nozzle (8) being shaped in such a way that the gaseous oxidant can be accelerated to supersonic speed, in particular to multiple supersonic speed, and
• the Laval nozzle being arranged in such a way that the oxidant can be accelerated parallel to the secondary fuel,
**characterized in that**
the Laval nozzle (8), which is designed as a nozzle (09) suitable for feeding a gaseous or liquid fuel, preferably natural gas, and which preferably has an electrical emission device, has means for heating the oxidant.

2. Burner according to Claim 1, **characterized in that** the means are suitable for heating the oxidant to a temperature of between -30°C and 1600°C, preferably 800°C.

3. Burner according to either one of Claims 1 and 2, **characterized in that** the Laval nozzle (8) has an infrared or ultraviolet probe suitable for monitoring the flame temperature in the Laval nozzle (8).

4. Burner according to one of Claims 1 to 3, **characterized in that** the Laval nozzle has additionally external cooling (84, 85), preferably water cooling or water/air spray cooling.

5. Burner according to one of the preceding claims, **characterized in that** the Laval nozzle (8) is arranged inside a larger nozzle (7).

6. Burner (1) according to one of the preceding claims, **characterized in that** at least one means for feeding the primary fuel is designed as a first annular gap (4).

7. Burner (1) according to one of the preceding claims, **characterized in that** at least one means for feeding the secondary fuel is designed as a nozzle (6a, 6b) and is arranged in the cylindrical central part (05).

8. Burner (1) according to one of the preceding claims, **characterized in that** the burner (1) has at least one means for feeding a gaseous oxidant, which is designed as an annular gap (2, 3).

9. Burner (1) according to one of the preceding claims, **characterized in that** the burner (1) has a first annular gap (4) for feeding the primary fuel, a second annular gap (2) and a third annular gap (3) for feeding a gaseous oxidant, the third annular gap (3) having suitable means for inducing a swirling movement of the gaseous oxidant.

10. Burner (1) according to Claim 9, **characterized in that** the second and/or the third annular gap (2, 3) have/has a larger diameter than the first annular gap (4).

11. Method for operating a burner (1) in an industrial furnace, a primary fuel and at least one secondary fuel being burnt by means of at least one gaseous oxidant, at least one gaseous oxidant being oxygen-enriched air, industrial oxygen or pure oxygen, **characterized in that** the oxygen-enriched air, the industrial oxygen or the pure oxygen is preheated and is accelerated via a Laval nozzle to supersonic speed parallel to the direction of emission of the primary and secondary fuel, the Laval nozzle having means for heating the oxidant, and preheating taking place by means of the feed of a gaseous or liquid fuel, preferably natural gas, via a nozzle.

12. Method according to Claim 11, **characterized in that** the oxygen-enriched air, the industrial oxygen or the pure oxygen is preheated to a temperature of between -30°C and 1600°C, preferably to 800°C.

13. Method according to either one of Claims 11 and 12, **characterized in that** industrial or pure oxygen is accelerated to supersonic speed via a Laval nozzle (8) into an airstream in a larger nozzle (7).

14. Method according to one of Claims 11 to 13, **characterized in that** a burner is operated in a rotary tubular furnace, in particular a rotary tubular furnace for cement production, in a rotary drum furnace, in particular for the melting and/or heating of aluminium, copper or lead, or in an electric arc furnace for steel production.

## Revendications

1. Brûleur (1) de géométrie essentiellement cylindrique, approprié pour la conduite d'un four industriel, comprenant :
- au moins un moyen approprié pour l'alimentation en un combustible primaire (4),
- au moins un moyen approprié pour l'alimentation en un combustible secondaire (6a, 6b) et
- une partie centrale axiale pratiquement cylindrique (5),
- qui présente au moins une buse (7) appropriée pour l'alimentation en un agent d'oxydation gazeux,
- la partie centrale (5) présentant au moins une buse supplémentaire (8) appropriée pour l'alimentation en un agent d'oxydation gazeux, laquelle buse est réalisée sous forme de buse de Laval (8), la buse de Laval (8) étant réalisée de telle sorte que l'agent d'oxydation gazeux puisse être accéléré à la vitesse supersonique, notamment à plusieurs fois la vitesse supersonique, et
- la buse de Laval étant disposée de telle sorte que l'agent d'oxydation puisse être accéléré parallèlement au combustible secondaire ;
**caractérisé en ce que**
la buse de Laval (8) présente un moyen pour chauffer l'agent d'oxydation, lequel est réalisé sous forme de buse (9) appropriée pour l'alimentation en un combustible gazeux ou liquide, de préférence du gaz naturel, et présente de préférence un dispositif d'allumage électrique.

2. Brûleur selon la revendication 1, **caractérisé en ce que** les moyens sont appropriés pour chauffer l'agent d'oxydation à une température comprise entre -30°C et 1600°C, de préférence 800°C.

3. Brûleur selon l'une quelconque des revendications 1 ou 2, **caractérisé en ce que** la buse de Laval (8) présente une sonde infrarouge ou ultraviolet appropriée pour surveiller la température de la flamme dans la buse de Laval (8).

4. Brûleur selon l'une quelconque des revendications 1 à 3, **caractérisé en ce que** la buse de Laval présente en outre un refroidissement extérieur (84, 85), de préférence un refroidissement à l'eau ou un refroidissement par pulvérisation eau-air.

5. Brûleur selon l'une quelconque des revendications précédentes, **caractérisé en ce que** la buse de Laval (8) est disposée à l'intérieur d'une plus grande buse (7).

6. Brûleur (1) selon l'une quelconque des revendications précédentes, **caractérisé en ce qu'**au moins un moyen pour l'alimentation en combustible primaire est réalisé sous forme de première fente annulaire (4).

7. Brûleur (1) selon l'une quelconque des revendications précédentes, **caractérisé en ce qu'**au moins un moyen pour l'alimentation en combustible secondaire est réalisé sous forme de buse (6a, 6b) et est disposé dans la partie centrale cylindrique (5).

8. Brûleur (1) selon l'une quelconque des revendications précédentes, **caractérisé en ce que** le brûleur (1) présente au moins un moyen pour l'alimentation en agent d'oxydation gazeux, lequel est réalisé sous forme de fente annulaire (2, 3).

9. Brûleur (1) selon l'une quelconque des revendications précédentes, **caractérisé en ce que** le brûleur (1) présente une première fente annulaire (4) pour l'alimentation en combustible primaire, une deuxième fente annulaire (2) et une troisième fente annulaire (3) pour l'alimentation en agent d'oxydation gazeux, la troisième fente annulaire (3) présentant des moyens appropriés pour induire un mouvement tourbillonnaire de l'agent d'oxydation gazeux.

10. Brûleur (1) selon la revendication 9, **caractérisé en ce que** la deuxième et/ou la troisième fente annulaire (2, 3) présente/présentent un plus grand diamètre que la première fente annulaire (4).

11. Procédé pour faire fonctionner un brûleur (1) dans un four industriel, un combustible primaire et au moins un combustible secondaire étant brûlés avec au moins un agent d'oxydation gazeux, au moins un agent d'oxydation gazeux étant de l'air enrichi en oxygène, de l'oxygène technique ou de l'oxygène pur, **caractérisé en ce que** l'air enrichi en oxygène, l'oxygène technique ou l'oxygène pur est préchauffé et est accéléré par le biais d'une buse de Laval à la vitesse supersonique parallèlement à la direction d'éjection du combustible primaire et du combustible secondaire, la buse de Laval présentant des moyens pour chauffer l'agent d'oxydation et le préchauffage s'effectuant au moyen de l'alimentation en un combustible gazeux ou liquide, de préférence du gaz naturel, par le biais d'une buse.

12. Procédé selon la revendication 11, **caractérisé en ce que** l'air enrichi en oxygène, l'oxygène technique ou l'oxygène pur est préchauffé à une température comprise entre -30°C et 1600°C, de préférence à 800°C.

13. Procédé selon l'une quelconque des revendications 11 ou 12, **caractérisé en ce que** l'oxygène technique ou l'oxygène pur est accéléré à la vitesse supersonique par le biais d'une buse de Laval (8) dans un flux d'air dans une plus grande buse (7).

14. Procédé selon l'une quelconque des revendications 11 à 13, **caractérisé en ce qu'**un brûleur est utilisé dans un four tubulaire rotatif, en particulier un four tubulaire rotatif pour la fabrication de ciment, un four à tambour rotatif, en particulier pour la fusion et/ou le chauffage d'aluminium, de cuivre ou de plomb, ou dans un four à arc électrique pour la fabrication d'acier.
